# NOUVEAU FASCICULE DE BREVET EUROPEEN

(11) **EP 0 725 042 B2**
(45) Date de publication et mention de la décision concernant l'opposition: **12.06.2002**
(45) Mention de la délivrance du brevet: 20.10.1999
(21) Numéro de dépôt: 96460002.7
(22) Date de dépôt: 18.01.1996
(51) Int. Cl.: C02F 3/06

(54) **Procédé de traitement d'effluents aqueux sur biofiltres ou autres dispositifs faisant appel aux cultures fixées**
Verfahren zur Abwasserbehandlung mittels biologischen Filtern oder anderen Vorrichtungen mit sessilen Biomassen
Method for the treatment of aqueous effluents using biofilters or other fixed-biomass devices

(30) Priorité: 02.02.1995 FR 9501412
(43) Date de publication de la demande: 07.08.1996
(73) Titulaire: OTV Omnium de Traitements et de Valorisation S.A., 94417 St Maurice Cédex (FR)
(72) Inventeur: Lesouef, André, F-92350 Le Plessis Robinson (FR)
(74) Mandataire: Vidon, Patrice

(56) Documents cités:
- EP-A- 0 524 794
- US-A- 1 456 914
- US-A- 3 976 568

## Description

L'invention concerne le domaine de l'épuration des effluents aqueux par voie biologique. L'invention concerne notamment le traitement des eaux résiduaires, telles que les eaux urbaines en vue de leur épuration, mais pourra aussi s'appliquer à d'autres types de traitements comme la potabilisation de l'eau ou le traitement des effluents industriels.

Plus précisément, l'invention concerne les traitements d'effluents aqueux incluant au moins une étape de filtration biologique.

Les traitements biologiques des effluents aqueux et notamment de l'eau, consistent à dégrader les impuretés organiques contenues dans ces effluents grâce à l'action d'une biomasse épuratrice. Il existe ainsi des procédés à biomasse libre ("boues activées) tel que par exemple celui divulgué dans le document du brevet des Etats-Unis d'Amérique nº 1456914 et des procédés à biomasse fixée mettant en oeuvre des biofiltres dans lesquels la biomasse est accrochée à un support. C'est plus précisément aux procédés incluant de tels biofiltres ou d'autres dispositifs à cultures fixées que se rapporte l'invention.

Les supports utilisés dans de tels biofiltres sont généralement constitués de particules présentant une masse volumique proche de celle de l'eau, telles que notamment des particules de polystyrène. Par ailleurs, les filtres utilisés pour de tels procédés sont généralement munis de moyens d'amenée d'air dans le matériau filtrant permettant, selon qu'ils sont ou non mis en oeuvre, le fonctionnement du filtre en aérobiose, en anaérobiose ou en anoxie.

Parmi les procédés basés sur le principe d'épuration à biomasse fixée on peut citer notamment celui décrit dans le brevet FR 2632947 de la Demanderesse et connu sous la dénomination "Biostyr". Ce procédé met en oeuvre un réacteur pour la purification par voie biologique d'eaux résiduaires par envoi, à co-courants ascendants, de l'eau à traiter et de gaz oxygéné dans un réacteur muni d'une zone inférieure de lit fluidisé et d'une zone supérieure de lit fixe, les particules des lits étant constituées par des matériaux expansés de densité inférieure à celle de l'eau, celles du lit fixe étant à la fois plus petites et plus légères que celles du lit fluidisé.

Les techniques de biofiltration permettent l'élimination ou, à tout le moins l'abattement, de la pollution carbonée mais aussi de la pollution azotée.

Pour l'élimination de la pollution carbonée, de tels filtres sont ensemencés avec des bactéries hétérotrophes qui, en présence d'air, dégradent les composées carbonés.

L'élimination de la pollution azotée se présentant sous forme d'ammonium est, quant à elle, classiquement réalisée par voie biologique en faisant subir auxdites eaux une étape de nitrification, au cours de laquelle l'azote ammoniacal est transformé par une biomasse en nitrates et une étape de dénitrification, au cours de laquelle les nitrates sont réduits par une biomasse en nitrites puis en azote gazeux. L'étape de nitrification est effectuée grâce à des bactéries autotrophes consommant de l'oxygène apporté au milieu tandis que l'étape de dénitrification est effectuée grâce à des bactéries hétérotrophes qui consomment l'oxygène des nitrates en l'absence d'oxygène moléculaire.

Cette transformation peut être réalisée soit dans un filtre unique en ménageant des temps d'aération et de non aération, soit dans des filtres séparés, l'un fonctionnant en anoxie, l'autre en aérobie.

Dans le cadre des installations de traitement d'effluents aqueux tels que celles pour l'épuration des eaux résiduaires, les biofiltres sont utilisés en grand nombre et, pour une fonction donnée, c'est-à-dire l'élimination de la pollution carbonée, la nitrification ou la dénitrification, fonctionnent en parallèle. De telles batteries de filtres peuvent ainsi être employées pour traiter de grandes quantités d'eau.

D'une façon classique, tous les filtres fonctionnant en parallèles sont alimentés concomitamment à flux variable, leur nombre étant conçu de façon à pouvoir supporter les plus fortes quantités d'eaux à traiter. Dans le cadre des installations de traitement des effluents aqueux intégrant de telles batteries de filtre, l'intégralité du flux est donc répartie de façon sensiblement égale dans tous les filtres, ceux-ci fonctionnant avec un flux plus ou moins important selon le flux total de l'eau entrant dans l'installation.

L'objectif de l'invention est de proposer un procédé d'épuration d'effluents aqueux, notamment d'eau résiduaire, mettant en oeuvres de telles batteries de filtres et permettant d'améliorer de façon sensible les performances épuratrices de tels biofiltres.

Un autre objectif de l'invention est de décrire un tel procédé d'épuration améliorée permettant, pour un même flux total appliqué et une même qualité de sortie, de se satisfaire d'un nombre de filtres plus faible.

Particulièrement, encore un autre objectif de l'invention est de présenter un tel procédé pouvant être utilisé pour améliorer les rendements de nitrification d'une installation de traitement d'eaux usées en vue de leur épuration.

Ces objectifs, ainsi que d'autres qui apparaîtront par la suite, sont atteints grâce à l'invention qui concerne un procédé de traitement d'un effluent aqueux contenant de l'azote Kjeldahl et/ou ammoniacal à éliminer, en vue de sa nitrification destinée à obtenir un résiduel maximum d'azote prédéterminé en fin dudit traitement, ledit procédé comprenant au moins une étape consistant à faire transiter l'eau à l'intérieur d'au moins une batterie de plusieurs filtres biologiques de nitrification à cultures fixées fonctionnant en parallèle. Le procédé selon l'invention est caractérisé en ce qu'il consiste à tracer une droite passant par les points représentants les abattements les moins bons pour les différentes charges attendues en entrée desdits filtres et à alimenter lesdits filtres à flux constant avec la plus grande charge possible permettant d'obtenir au maximum ledit résiduel en sortie, ladite plus grande charge possible étant obtenue en utilisant ladite droite. En d'autres termes, le flux constant correspond à la capacité maximum d'un filtre compatible avec la qualité visée en sortie. Selon une autre caractéristique, l'invention consiste à faire varier le nombre de filtres alimentés et le nombre de filtres non alimentés de ladite batterie en fonction du flux total d'effluent aqueux à traiter. (On appelle flux d'un composé présent dans l'eau le produit de sa concentration par le débit à traiter).

Ainsi, contrairement aux préceptes de l'art antèrieur, qui a toujours enseigné d'alimenter concomitamment tous les filtres biologiques d'une batterie de filtres fonctionnant en parallèle à flux variable, l'invention préconise une alimentation de ces filtres à flux constant, le nombre de filtres ainsi alimentés à flux constant croissant et diminuant avec les variations du flux total d'effluent liquide à traiter. D'une façon tout à fait surprenante et inattendue, il a en effet été constaté qu'une telle alimentation des filtres à flux constant entraînait une amélioration importante des performances de filtration de ceux-ci, par rapport à une alimentation à flux variable.

Lors de la mise en oeuvre d'un tel procédé, au moins certains filtres de la batterie ne sont pas alimentées en eaux et donc ne fonctionnent pas. Or, il a été vérifié que, également d'une façon surprenante, des durées de non-alimentation de tels filtres biologiques, même relativement longues et de l'ordre de plusieurs jours, ne nuisaient absolument pas à l'efficacité de la biomasse lorsque ces filtres étaient de nouveaux alimentés en effiuent aqueux. Une telle découverte va à l'encontre des connaissances de l'homme de l'art pour lequel un arrêt de l'apport de nutriments à la biomasse devait logiquement entraîner la dégradation de cette biomasse.

Selon l'invention, au débit nominal un certain nombre de filtres sont alimentés en parallèle à flux sensiblement constant. Dès que le flux d'effluent à traiter augmente, un autre filtre est alimenté en parallèle toujours à flux constant. Lorsque le flux global continue d'augmenter encore un autre filtre est alimenté et ainsi de suite. A contrario, lorsque le flux global diminue, le nombre de filtres alimentés à flux constant diminue aussi. Ainsi, chaque filtre connaît principalement deux états :
- un état dans lequel il est alimenté en effiuent à flux essentiellement constant et,
- un état dans lequel il est n'est pas alimenté en effluent à traiter, le matériau filtrant du filtre restant bien sûr noyé dans l'effluent pendant ces périodes de non-alimentation.

On comprendra toutefois que le dernier filtre alimenté pourra bien sûr connaître un flux variable

Contrairement à ce qu'enseignait l'état de la technique les filtres ne sont donc plus systématiquement alimentés concomitamment mais successivement et cumulativement.

Selon l'invention, lesdits filtres biologiques sont munis de moyens d'apport d'un gaz oxydant, tel que l'air. Toutefois, dans certains modes de réalisation, il pourra être envisagé de ne pas équiper ces filtres de tels moyens d'aération.

Lesdits filtres biologiques sont des filtres de nitrification. Il a en effet été constaté, et ceci ressortira particulièrement clairement des exemples de réalisation de l'invention qui seront présentés ci-après, que la mise en oeuvre d'un tel procédé sur des filtres biologiques de nitrification d'un effluent aqueux entraînait des améliorations sur l'abattement de la teneur en pollution ammoniacale allant jusqu'à 75%.

Egalement avantageusement, le procédé comprend aussi une étape consistant à faire varier l'ordre d'alimentation des filtres. Une telle étape permet ainsi de faire varier les filtres alimentés en premier et donc d'éviter que ce soit toujours les mêmes filtres biologiques qui fonctionnent le plus, alors que d'autres fonctionnent moins.

Bien que l'on pourra envisager de faire varier l'ordre d'alimentation des filtres de façon plus ou moins empirique, d'une façon particulièrement intéressante, le procédé selon l'invention comprendra préférentiellement également une étape consistant à mesurer pour chaque filtre biologique, la durée d'alimentation cumulée et/ou le flux cumulé appliqué en effluent aqueux et la durée de non-alimentation cumulée et une étape consistant à faire varier l'ordre d'alimentation des filtres en fonction des durées relevées. Ainsi, globalement, chaque filtre connaîtra sur une longue période sensiblement le même flux et/ou la même durée d'utilisation.

Le flux constant d'alimentation de chaque filtre sera choisi de façon à correspondre à la capacité maximale d'épuration desdits filtres.

L'invention concerne également une installation pour la mise en oeuvre d'un tel procédé, selon la revendication 4. De tels moyens permettront d'alimenter en parallèle, au flux moyen, un nombre X de filtres à flux constant, puis lorsque le flux augmentera, un nombre X + 1 puis X + 2 etc.. de filtres toujours à flux constant et lorsque le flux diminuera, un nombre X - 1 puis X-2 etc.. de filtres également toujours à flux constant. Le nombre X sera bien sûr déterminé en fonction du flux moyen et le nombre total de filtres sera choisi de façon à supporter les plus gros flux devant être traités.

Avantageusement, l'invention inclut aussi des moyens permettant de faire varier l'ordre d'alimentation desdits filtres biologiques de façon, comme expliqué ci-dessus à équilibrer les durées de fonctionnement cumulées et/ou les flux appliqués cumulés des différents filtres.

Egalement avantageusement, l'installation inclut des moyens de mesure des durées d'alimentation ainsi que de flux appliqués et/ou de non alimentation en effluent aqueux de chacun desdits filtres biologiques, lesdits moyens de mesure étant reliés auxdits moyens permettant de faire varier l'ordre d'alimentation desdits filtres biologiques.

Préférentiellement, lesdits filtres biologiques incluent des moyens d'apport d'un gaz oxydant tel que l'air.

Egalement préférentiellement, lesdits filtres biologiques sont des filtres de nitrification. Comme déjà précisé ci-dessus ces filtres sont munis de moyens d'apport en oxygène et ensemencés avec des bactéries autotrophes transformant l'ammonium en nitrate.

L'invention, ainsi que les différents avantages qu'elle présente, seront plus facilement compris grâce à la description qui va suivre d'un exemple non limitatif de réalisation en référence aux dessins, dans lesquels :
- la figure 1 représente une vue schématique de l'étape de nitrification d'une installation de traitement d'eaux résiduaires mettant en oeuvre le procédé selon l'invention;
- la figure 2 représente la teneur de l'effluent traité en azote ammoniacal en sortie d'une étape de nitrification telle que représentée à la figure 1 en fonction de la charge d'azote ammoniacal en entrée, d'une part lorsque l'installation est alimentée en régime variable et, d'autre part lorsqu'elle est alimentée à flux constant, chaque mesure correspondant à une moyenne sur 24 H ;
- la figure 3 représente le même type de résultats, chaque mesure correspondant à une moyenne de 2 heures.

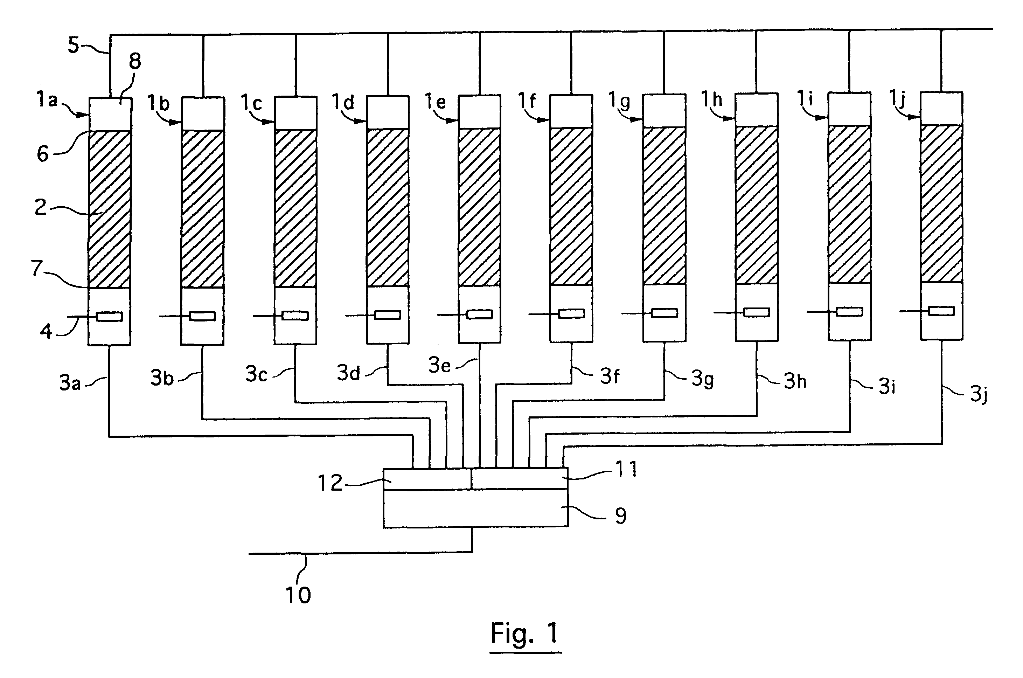

En référence à la figure 1, une installation formant l'étage de nitrification d'une installation pour l'épuration d'eaux usées comprenant une batterie de dix filtres identiques 1a à 1j installés en parallèle est représentée.

Ces filtres sont du type connu de l'homme de l'art sous la dénomination "BYOSTYR" et conçus par la Demanderesse. Ils incluent chacun un matériau filtrant 2 constitués par des particules de polystyrène retenues au sein du filtre par des plaques perforées 6,7. Ce matériau filtrant a été préalablement ensemencé avec des bactéries nitrifiantes autotrophes qui se sont développés sur les particules en question et s'y sont accroché. Ces filtres présentent également dans leur partie inférieure des moyens d'amenée de l'eau à nitrifier constitués par des canalisations 3a à 3j, et dans leur partie supérieure des moyens d'évacuation des eaux nitrifiées constitués par des canalisations 5. Le flux d'eau au sein de tels filtres est donc un flux ascendant. Ils sont également pourvus dans leur partie inférieure de moyens d'amenée d'air 4 à co-courant de l'écoulement d'eau. Enfin, on notera également que chacun de ces filtres présente par ailleurs dans sa partie supérieure une réserve d'eau de lavage 8 qui, sous l'effet d'une chasse d'eau (non représentée), permet l'écoulement rapide à contre-courant de cette eau de lavage et ainsi le décolmatage du matériau filtrant.

Ces dix filtres sont aptes à fonctionner soit en régime variable conformément à l'état de la technique, soit à flux constant selon l'invention grâce à des moyens 9 prévus à cet effet. Dans les deux cas, l'eau à nitrifier arrive par une canalisation commune 10.

Les moyens 9, sont par ailleurs couplés à des moyens 11 permettant de mesurer pour chaque filtre les durées d'alimentation cumulée et les flux cumulés appliqués et les durées de non-alimentation cumulées et à des moyens 12 pour faire varier l'ordre d' alimentation des filtres à flux constant en fonction des mesures relevées par les moyens 11.

Pendant une première période de 70 jours, l'installation a été testée à régime variable (selon l'enseignement de l'état de la technique), sans mettre en oeuvre les moyens 9 permettant d'alimenter les filtres à flux constant. Selon ce procédé de fonctionnement, le filtre pilote a été alimenté en suivant les variations du débit global. Pendant cette première période, la gamme des charges appliquées a été la suivante :

| | |
|---|---|
| - Vitesse d'alimentation des filtres en eau (m/h) | 3 à 8 |
| - Charge NTK (kg/m³.j) | 0,3 à 1,1 |
| - Charge en N-NH₄ (kg/m³.j) | 0,3 à 0,9 |

La vitesse de l'air alimenté dans les filtres est restée sensiblement constante de l'ordre de 18 Nm/h.

Des mesures des valeurs moyennes sur 24 heures de la teneur en entrée et en sortie de l'installation des eaux traitées en azote ammoniacal ont été effectuées. Ces mesures traduisent l'abattement de la teneur en azote ammoniacal. Régulièrement, des mesures ont été effectuées toute les deux heures.

Pendant une seconde période de 63 jours, l'installation a ensuite été testée en mettant en oeuvre le procédé selon l'invention, c'est-à-dire en utilisant les moyens 9 permettant d'alimenter le filtre à un flux optimal constant lorsque le filtre n'était pas alimenté.

Des valeurs moyennes sur 24 heures et sur 2 heures ont également été mesurées.

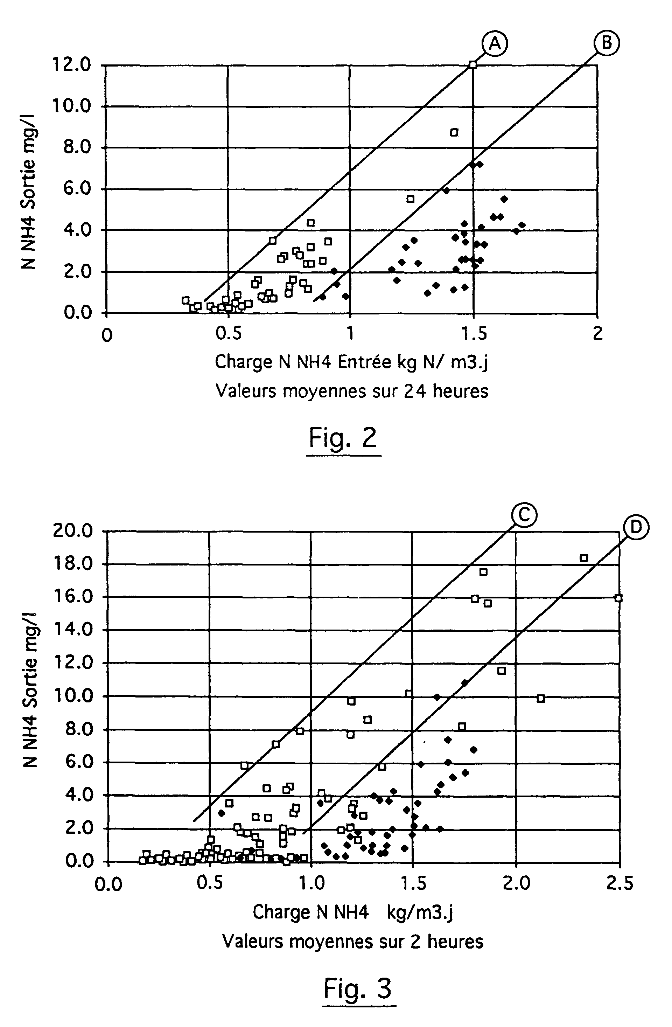

La figure 2 montre les valeurs moyennes observées sur 24 heures de la teneur en azote ammoniacal en sortie de l'installation en fonction de la charge de ce composé en entrée, d'une part lorsque l'installation fonctionne en régime variable (carrés blancs) et d'autre part lorsque l'installation fonctionne à flux constant (carrés noirs). La droite (A) passe par les points représentant les abattement les moins bons obtenus pour une charge initiale donnée lorsque l'installation fonctionne à régime variable et la droite (B) passe par les points représentant les abattements les moins bons obtenus pour une charge donnée lorsque l'installation fonctionne grâce au procédé selon l'invention.

Les droites A et B permettent de visualiser l'amélioration des performances de traitement autorisées par à un tel procédé. Ainsi, pour une charge d'azote ammoniacal en entrée de 1,5 kg N/m³, on obtient en régime variable un résiduel en sortie de 12 mg/l alors qu'on obtient à débit constant, un résiduel de 7 mg/l seulement, soit une amélioration de la performance de filtration du filtre de 45%. Pour une charge de 0,8 kg N/m³, on obtient en régime variable un résiduel en sortie de 5mg/l alors qu'on obtient à flux constant, un résiduel de 1 mg/l selon la droite A soit une amélioration de 80 %.

La figure 3 montre les valeurs moyennes observées sur 2 heures de la teneur en azote ammoniacal en sortie de l'installation en fonction de la charge de ce composé en entrée, d'une part lorsque l'installation fonctionne en régime variable (carrés blancs) et d'autre part lorsque l'installation fonctionne à flux constant (carrés noirs). La droite (C) passe par les points représentant les abattement les moins bons obtenus pour une charge initiale donnée lorsque l'installation fonctionne à régime variable et la droite (D) passe par les points représentant les abattements les moins bons obtenus pour une charge donnée lorsque l'installation fonctionne grâce au procédé selon l'invention.

Les droites C et D permettent de visualiser l'amélioration des performances de traitement autorisées par un tel procédé. Ainsi, pour une charge d'azote ammoniacal en entrée de 1,5 kg N/m³, on obtient en régime variable un résiduel en sortie de 15 mg/l selon la droite C alors qu'on obtient à flux constant, un résiduel de 8 mg/l selon la droite D soit une amélioration de 47 %.

Une telle différence de performance entre les deux régimes s'interprète par l'hypothèse que les dispositifs étant alimentés avec la plus grande charge possible compatible avec la capacité d'oxygénation des dispositifs, il se constitue pour chaque dispositif un stock maximum de biomasse. De plus, une fois constituée, la biomasse reste de façon surprenante bien accrochée sur le filtre et, du fait d'un taux de mortalité nettement inférieur au taux de croissance, reste disponible, offrant ainsi une capacité accrue de traitement.

Dans le cadre du procédé selon l'invention, certains filtres sont amenés à ne pas fonctionner pendant des temps relativement longs. Il a été prouvé que ces arrêts, même très longs n'altéraient pas sensiblement l'activité de la biomasse. Ainsi, les tableaux suivants présentent les résultats sur l'abattement de la teneur en azote ammoniacal d'un des filtres de l'installation représentée à la figure 1, le fonctionnement de ce filtre ayant été stoppé à plusieurs reprises pendant plusieurs jours.

| Jour | Charge appliquée (kg N-NH4/m3.j) | Rendement (%) | N-NH4 sortie (mg/l) |
|---|---|---|---|
| T6 | 1,4 | 79,3 | 5,9 |
| T7 | 1,5 | 76,3 | 7,1 |
| T12 | 1,45 | 85 | 4,4 |
| T19 | 1,45 | 91,9 | 2,4 |
| T28 | 1,52 | 92,2 | 1,4 |

| **3 jours d'arrêt** | | | |
|---|---|---|---|
| T32 | 1,55 | 89,8 | 3,3 |
| T33 | 1,45 | 87,1 | 3,8 |
| T34 | 1,42 | 92,7 | 2,1 |
| T35 | 1,45 | 91,7 | 2,5 |

| **5 jours d'arrêt** | | | |
|---|---|---|---|
| T41 | 1,61 | 86,1 | 4,5 |
| T42 | 1,65 | 83,5 | 5,5 |
| T43 | 1,63 | 86,2 | 4,5 |
| T44 | 1,45 | 88,3 | 3,4 |
| T45 | 1,44 | 91,3 | 2,5 |
| T46 | 1,68 | 88,4 | 3,9 |
| T47 | 1,69 | 87,2 | 4,3 |

| **5 jours d'arrêt** | | | |
|---|---|---|---|
| T53 | 1,41 | 88,4 | 3,5 |
| T54 | 1,53 | 86,4 | 4,1 |

| **7 jours d'arrêt** | | | |
|---|---|---|---|
| T62 | 0,95 | 93,2 | 1,3 |
| T63 | 0,98 | 96,0 | 0,8 |

Ces tableaux prouvent que, même après des arrêts très longs (jusqu'à 7 jours), les performances du filtre ne sont pas diminuées.

Les moyens 11 de l'installation décrite ci-dessus permettent de mesurer, pour chaque filtre, ses durées de fonctionnement, les charges appliquées, et ses durées de non-fonctionnement. En fonction des mesures relevées par ces moyens 11, les moyens 12 peuvent être mis en oeuvre pour faire varier automatiquement l'ordre d'alimentation des filtres. Ainsi, lorsque le débit augmente, les moyens 11 peuvent indiquer quel filtre n'a pas fonctionné depuis le plus longtemps ou quel filtre a reçu la plus faible charge cumulée sur une période donnée. Les moyens 12 permettent alors d'envoyer le surplus de flux vers ce filtre. Inversement, lorsque le flux global diminue, les moyens 11 peuvent indiquer quel filtre fonctionne depuis le plus longtemps ou a reçu la plus forte charge cumulée sur une période donnée, les moyens 12 permettant d'arrêter alors le fonctionnement de ce filtre.

Ces moyens 1 et 12 permettent ainsi d'optimiser les biofiltres de façon telle que chaque filtre connaisse, sur de longues périodes, la même durée d'alimentation que les autres filtres et/ou le même flux d'alimentation.

Le mode de réalisation de l'invention ici décrit n'a pas pour objet de réduire la portée de celle-ci. En particulier, la batterie de biofiltres pourra contenir un nombre différent de filtres et ceux-ci pourront bien sûr être constitués par d'autres biofiltres que ceux décrits.

## Revendications

1. Procédé de traitement d'un effluent aqueux contenant de l'azote Kjeldahl et/ou ammoniacal à éliminer en vue de sa nitrification destinée à obtenir un résiduel maximum d'azote prédéterminé en fin dudit traitement, ledit procédé comprenant au moins une étape consistant à faire transiter l'eau à l'intérieur d'au moins une batterie de plusieurs filtres biologiques de nitrification à cultures fixées fonctionnant en parallèle, lesdits filtres biologiques étant munis de moyens d'amenée d'air,
**caractérisé en ce qu'**il consiste à tracer une droite (B,D) passant par les points représentants les abattements les moins bons pour les différentes charges attendues en entrée desdits filtres, et à alimenter lesdits filtres à flux d'azote Kjeldahl et/ou ammoniacal constant avec la plus grande charge possible permettant d'obtenir au maximum ledit résiduel en sortie, ladite plus grande charge possible étant obtenue en utilisant ladite droite (B, D)
à faire varier le nombre de filtres biologiques alimentés et le nombre de filtres biologiques non alimentés de ladite batterie en fonction du flux total d'effluent aqueux à traiter,
le dernier filtre alimenté pouvant connaître un flux variable.

2. Procédé de traitement selon la revendication 1 **caractérisé en ce qu'**il consiste à faire varier l'ordre d'alimentation des filtres.

3. Procédé de traitement selon la revendication 2 **caractérisé en ce qu'**il comprend :
- une étape consistant à mesurer pour chaque filtre biologique, la durée d'alimentation cumulée et/ou les flux cumulés sur une période de temps donnée en effluent aqueux et la durée de non-alimentation,
- une étape consistant à faire varier l'ordre d'alimentation des filtres en fonction des durées relevées et/ou des flux cumulés appliqués.

4. Installation pour la mise en oeuvre d'un procédé selon l'une quelconque des revendications 1 à 3 incluant au moins une batterie de plusieurs filtres biologiques (1a à 1j) de nitrification à cultures fixées fonctionnant en parallèle incluant des moyens d'amenée d'air (4), **caractérisée en ce qu'**elle inclut des moyens (9) d'alimentation successives et cumulative desdits filtres biologiques à flux d'azote NH4 et/ou Kjeldahl constant, de façon à appliquer à chaque filtre alimenté ladite plus grande charge possible obtenue en utilisant ladite droite (B, D)

5. Installation selon la revendication 7 **caractérisée en ce qu'**elle inclut des moyens permettant de faire varier l'ordre d'alimentation desdits filtres biologiques.

6. Installation selon la revendication 5 **caractérisée en ce qu'**elle inclut des moyens de mesure (11) des durées d'alimentation et/ou de flux de pollution appliqué et/ou de non alimentation en effluent aqueux de chacun desdits filtres biologiques, lesdits moyens de mesure (11) étant reliés auxdits moyens (12) permettant de faire varier l'ordre d'alimentation desdits filtres biologiques (1a à 1j).

## Patentansprüche

1. Behandlungsverfahren für Abwässer, die zu entfernenden Kjeldahlstickstoff und/oder ammoniakalischen Stickstoff enthalten, um das Abwasser derart zu nitrieren, dass man am Ende der Behandlung den maximalen Stickstoffrückstand erhält, wobei das Verfahren mindestens einen Schritt umfasst, der darin besteht, das Wasser im Inneren von mindestens einer Batterie mehrerer parallel geschalteter biologischer Nitrierungsfilter mit festen Kulturen fließen zu lassen, wobei diese biologischen Filter über Luftzufuhrmittel verfügen,
**dadurch gekennzeichnet, dass** es die folgenden Schritte umfasst:
- Zeichnen einer Geraden (B, D), die durch die Punkte verläuft, welche die schlechtesten Verringerungen für die am Eingang der erwähnten Filter erwarteten verschiedenen Belastungen darstellen sowie Speisen der Filter mit konstantem Durchfluss an Kjeldahl-Stickstoff und/oder an ammoniakalischem Stickstoff mit der größtmöglichen Belastung, für welche höchstens der besagte Rückstand am Ausgang erzielbar ist, wobei diese höchste Belastung durch Verwendung der Geraden (B, D) erzielt wird,
- Variieren der Zahl der gespeisten biologischen Filter sowie der Zahl der nicht gespeisten biologischen Filter der erwähnten Batterie, als Funktion des Gesamtflusses der zu behandelnden Abwässer, wobei der zuletzt gespeiste Filter einen variablen Fluss aufweisen kann.

2. Behandlungsverfahren nach Anspruch 1, **dadurch gekennzeichnet, dass** die Reihenfolge der Filtereinspeisung variiert wird.

3. Behandlungsverfahren nach Anspruch 2, **dadurch gekennzeichnet, dass** es die folgenden Schritte umfasst:
- einen Schritt, bei dem für jedes biologische Filter die kumulierte Dauer der Speisung und/oder die kumulierten Strömungszeiten des Abwassers und die Dauer der Nichteinspeisung über einen gegebenen Zeitraum gemessen werden;
- einen Schritt der im Variieren der Reihenfolge der Speisung der Filter als Funktion der festgestellten Zeiten und/oder der angewandten kumulierten Strömungen besteht.

4. Anlage zur Anwendung des Verfahrens nach einem der Ansprüche 1 bis 3, die mindestens eine Batterie mit mehreren parallel geschalteten biologischen Nitrierungsfiltern mit festen Kulturen (1a bis 1j) umfasst, welche über Mittel zur Luftzufuhr (4) verfügen, **dadurch gekennzeichnet, dass** sie über Mittel (9) zur aufeinanderfolgenden und kumulativen Speisung dieser biologischen Filter mit konstantem Durchfluss an NH₄- und/oder Kjeldahl-Stickstoff verfügt, um jeden dieser gespeisten Filter der größtmöglichen Belastung unter Verwendung der Geraden (B, D) auszusetzen.

5. Anlage nach Anspruch 4, **dadurch gekennzeichnet, dass** sie Mittel zum Messen umfasst, die das Variieren der Reihenfolge der Speisung der biologischen Filter ermöglichen.

6. Anlage nach Anspruch 5, **dadurch gekennzeichnet, dass** sie über Mittel zum Messen der Speisungsdauern (11) und/oder der angewandten Verunreinigungsströmung und/oder der Nichteinspeisung an Abwässern für jedes der biologischen Filter verfügt, wobei die Mittel zum Messen (11) mit den Mitteln (12) verbunden sind, mit denen die Reihenfolge der Speisung der biologischen Filter (1a bis 1j) variiert werden kann.

## Claims

1. Method for the treatment of an aqueous effluent, containing Kjeldahl nitrogen and/or ammonia nitrogen to be removed, with a view to its nitrification intended to obtain a predetermined maximum residual nitrogen content at the end of the said treatment, the said method comprising at least one step consisting in passing the water into the interior of at least one battery of a multiplicity of fixed-culture biological nitrification filters operating in parallel, the said biological filters being equipped with means for supplying air,
**characterised in that** it consists
- in plotting a straight line (B, D,) passing through the points representing the poorest decreases in the various loadings expected at the inlet of the said filters and in feeding the said filters at a constant flow rate of Kjeldahl nitrogen and/or ammonia nitrogen with the largest possible loading enabling the said residual content at most to be obtained at the outlet, the said largest possible loading being obtained using the said straight line (B, D),
in varying the number of biological filters fed and the number of biological filters not fed in the said battery as a function of the total flow rate of aqueous effluent to be treated, it being possible for the final filter fed to be subject to a variable flow rate.

2. Treatment method according to Claim 1, **characterised in that** it consists in varying the order in which the filters are fed.

3. Treatment method according to Claim 2, **characterised in that** it comprises:
- a step consisting in measuring, for each biological filter, the cumulative period of time for which aqueous effluent is fed and/or the cumulative flow rates of aqueous effluent over a given period of time and the period of time for which there is no feed,
- a step consisting in varying the order in which the filters are fed as a function of the periods recorded and/or the cumulative flow rates applied.

4. Installation for implementation of a method according to any one of Claims 1 to 3 including at least one battery of a multiplicity of fixed-culture biological nitrification filters (1a to 1j) operating in parallel, including means for supplying air (4), **characterised in that** it includes means (9) for successive and cumulative feeding of the said biological filters at constant flow rate of NH₄ nitrogen and/or Kjeldahl nitrogen, so as to apply to each filter fed the said maximum possible loading obtained using the said straight line (B, D).

5. Installation according to Claim 4, **characterised in that** it includes means enabling the order in which the said biological filters are fed to be varied.

6. Installation according to Claim 5, **characterised in that** it includes means for measuring (11) the periods of time for which aqueous effluent is fed and/or the pollution flow rate of aqueous effluent applied and/or the periods of time for which aqueous effluent is not fed to each of the said biological filters, the said measurement means (11) being linked to the said means (12) enabling the order in which the said biological filters (1a to 1j) are fed to be varied.
